Europäisches Patentamt

European Patent Office

Office européen des brevets

(11) Publication number: **0 452 527 A1**

# EUROPEAN PATENT APPLICATION

(21) Application number: 90107351.0

(51) Int. Cl.⁵: **C08J 9/00**, //C08L23:00

(22) Date of filing: 18.04.90

(43) Date of publication of application:
23.10.91 Bulletin 91/43

(84) Designated Contracting States:
CH DE FR GB IT LI NL SE

(71) Applicant: NIPPON UNICAR KABUSHIKI KAISHA
6-1, Ohtemachi 2-chome Chiyoda-ku
Tokyo(JP)

(72) Inventor: Senuma, Akitaka
21-3, Saitobuncho, Kanagawa-ku
Yokohama-shi, Kanagawa-ken(JP)
Inventor: Tsukada, Kiroku
1-17-2-406 Saido, Konan-ku
Yokohama-shi, Kanagawa-ken(JP)

(74) Representative: Schwan, Gerhard, Dipl.-Ing.
Elfenstrasse 32
W-8000 München 83(DE)

(54) Process for the production of heatresistant crosslinked ethylene resin foams of open-cell type.

(57) A process for the production of heat-resistant crosslinked ethylene resin foams of open-cell type, comprising heating a composition composed of:

(A) 100 parts by weight of an ethylene resin,

(B) 1 to 30 parts by weight of a blowing agent,

(C) 0.2 to 10 parts by weight of an organic peroxide, and

(D) a component selected from the group consisting of

(a) 0.1 to 10 parts by weight of a trifunctional monomer and 0.1 to 5 parts by weight of a silicone oil

(b) 0.1 to 5 parts by weight of a silicone block copolymer, and

(c) 0.1 to 5 parts by weight of polyethylene glycol, polypropylene glycol, a copolymer of ethylene oxide and propylene oxide, or a homopolymer or copolymer of other polyalkylene oxide,

followed by cooling, to give a crosslinked ethylene resin foam of open-cell type, and then irradiating the foam with ionizing radiation.

EP 0 452 527 A1

## Technical Field

The present invention relates to a process for the production of crosslinked ethylene resin foams of open-cell type having improved heat resistance.

## Background of the Invention

The present inventors have previously proposed compositions for the production of crosslinked ethylene resin foes of open-cell type superior in breathability, water absorption and weather resistance. (See Japanese Patent Publication No. 49657/1985, Japanese Patent Kokai Nos. 113034/1988, etc.) However, it has been often required that the open-cell foams produced from these compositions should have more improved heat resistance when they are used as a building cushioning material, automotive interior cushioning material and packaging sheet.

In addition, it has been required that the open-cell foam in sheet foam produced from these composition should have good heat resistance in the case where the foam sheet is bonded to a substrate such as closed-cell foam sheet at a high temperature to give a composite sheet having a unique cushioning property. Any foam sheet lacking heat resistance is liable to flow and deform in the laminating process performed at a high temperature.

The present inventors carried out investigations to develop a new open-cell foam having better heat resistance than that obtained from the composition disclosed in Japanese Patent Publication No. 49657/1985 etc., and as the result thereof attained the present invention.

It is an object of the present invention to provide a process for producing an open-cell foams having better heat resistance than before. This object is achieved by irradiating with ionizing radiation an open-cell foam produced from the conventional composition.

## Disclosure of the Invention

The present invention relates to a process for producing heat-resistant crosslinked ethylene resin foam of open-cell type, said process comprising heating a composition composed of:

(A) 100 parts by weight of an ethylene resin,

(B) 1 to 30 parts by weight of a blowing agent,

(C) 0.2 to 10 parts by weight of an organic peroxide, and

(D) a component selected from the group consisting of the following (a), (b) and (c),

(a) 0.1 to 10 parts by weight of a trifunctional monomer and 0.1 to 5 parts by weight of a silicone oil represented by the formula:

$R_3SiO-[R_2SiO]_kSiOR_3$ (where R denotes a monovalent hydrocarbon radical, and k denotes an integer of 10 to 730)

(b) 0.1 to 5 parts by weight of a silicone block copolymer selected from:

$R_3SiO-[R_2SiO]_m-[RXSiO]_s-SiR_3$ or

$RSi-[O-(R_2SiO)_q-Y]_3$

(where

| | |
|---|---|
| R : | a monovalent hydrocarbon radical |
| X : | $-[(O)_p-(C_nH_{2n}O)_t-R']$, |
| R': | a radical selected from hydrogen, an alkyl, allyl, aralkyl and carbamyl radical, |
| p : | 0 or 1, |
| Y : | $(C_nH_{2n}O)_t-R'$, |
| m : | 0 to 300, |
| n : | 2 to 10, |
| s : | 1 to 30, |
| q : | 1 to 300, |
| t : | 1 to 100, and |
| $(C_nH_{2n}O)$ : | an oxyalkylene radical or a mixture of oxyalkylene radical) and |

(c) 0.1 to 5 parts by weight of polyethylene glycol, polypropylene glycol, a copolymer of ethylene oxide and propylene oxide, or a homopolymer or copolymer of other polyalkylene oxide represented by the formula:

$RO-[C_{n'}H_{2n'}O]_{t'}-R$

(where R is a radical selected from hydrogen and a monovalent hydrocarbon radical; n' is an integer of 2 to 10; and t' is an integer of 20 to 400.)

followed by cooling, to give a crosslinked ethylene resin foam of open-cell type, and the irradiating the foam with ionizing radiation.

The ethylene resins used in the present invention is a polymer composed mainly of ethylene, such as high-pressure polyethylene, linear low-density polyethylene (LLDPE), ethylene-vinyl ester copolymers, ethylene-acrylic acid copolymer, ethylene- α-olefin copolymers, etc. Examples of the ethylene copolymer include ethylene-vinyl acetate copolymer, ethylene-acrylic acid copolymer, ethylene-methacrylic acid copolymer, ethylene-methyl acrylate copolymer, ethylene-methyl methacrylate copolymer, ethylene-ethyl acrylate copolymer, ethylene-ethyl methacrylate copolymer, ethylene-propylene copolymer, ethylene-butene-1 copolymer, ethylene-pentene-1 copolymer, ethylene-hexene-1 copolymer, ethylene-octene-1 copolymer, ethylene-4-methylpentene-1 copolymer, ethylene-propylene-diene terpolymer, and ethylene-hexene-1 terpolymer.

The organic peroxides that can be used in the present invention are those which have a 10-minute half-life temperature of 100 to 220°C . Suitable peroxides include the following. (Parenthesised numeral indicates the 10-minute half-life decomposition temperature ( °C ).)

Succinic acid peroxide (110), benzoyl peroxide (110), t-butylperoxy 2-ethylhexanoate (113), p-chlorobenzoyl peroxide (115), t-butyl peroxyisobutyrate (115), t-butyl peroxyisopropylcarbonate (135), t-butyl peroxylaurate (140), 2,5-dimethyl-2,5-di(benzoyloxy)hexane (140), t-butyl peroxyacetate (140), di-t-butyl diperoxyphthalate (140),t-butyl peroxymaleic acid (140), cyclohexanone peroxide (145), t-butyl diperoxybenzoate (145), dicumyl peroxide (150), 2,5-dimethyl-2,5-di(t-butylperoxy)hexane (155), t-butylcumyl peroxide (155), t-butyl hydroperoxide (158), di-t-butyl peroxide (160),2,5-dimethyl-2,5-di-(t-butylperoxy)hexyne-3(170), di-isopropylbenzene hydroperoxide (170), p-methane hydroperoxide(180), and 2,5-di-methylhexane-2,5-dihydroperoxide (213).

The blowing agents that can be used in the present invention are those which have a foaming temperature in the range of 90 to 220°C . Suitable blowing agents include any blowing agent which is used in combination with a promoter or auxiliary to adjust the foaming temperature to this range.

Examples of the blowing agent include the following:

Azobisisobutyronitrile, diazocarbonamide, p-toluenesulfonyl hydrazide, 4,4'-oxybis(benzenesulfonyl hydrazide), n-heptane, n-octane, n-nonane, and n-decane.

The trifunctional monomers that can be used in the present invention include triallyl cyanurate, triallyl isocyanurate, triallyl trimellitate, etc.

The silicone oils that can be used in the present invention should preferably be those which have a viscosity lower than 10,000 cs at room temperature (corresponding to a degree of polymerization of about 730).

The polyethylene glycol, polypropylene glycol, or a copolymer of ethylene oxide and propylene oxide that can be used in the present invention should preferably be one which has a molecular weight greater than 1000 (corresponding to a degree of polymerization of about 20). Those which have a molecular weight lower than 1000 are less miscible and liable to exude from the surface of the product after molding.

The composition of the present invention should contain the organic peroxide in an amount of 0.2 to 10 parts by weight. With less than 0.2 parts by weight, the organic peroxide is not enough to increase the viscosity of the resin when the composition is heated, and the resulting foam is subject to permanent set. With more than 10 parts by weight, the organic peroxide does not enhances the crosslinking effect any more.

The composition of the present invention should contain the blowing agent in an amount of 1 to 30 parts by weight. With less than 1 part by weight, the blowing agent hardly produces the foaming effect. With more than 30 parts by weight, the blowing agent is mostly wasted at the time of blowing.

The composition of the present invention should contain the trifunctional monomer in an amount of 0.1 to 10 parts by weight. With less than 0.1 parts by weight, the trifunctional monomer hardly produces its effect. With more than 10 parts by weight, the trifunctional monomer oozes out from the surface of the foam product.

The composition of the present invention should contain the silicone oil in an amount of 0.1 to 5 parts by weight. With less than 0.1 parts by weight, the silicone oil does not provide the uniform fine cell structure. With more than 5 parts by weight, the silicone oil exudes from the surface of the foam product.

The composition of the present invention should contain the silicone block copolymer selected from:

$R_5SiO-[R_2SiO]_m-[RXSiO]_6-SiR_3$     (1) or

EP 0 452 527 A1

RSi-[O-(R_2SiO)_q-Y]_3     (2)

(where
    R :          a monovalent hydrocarbon radical,
    X :          $-[(O)_p-(C_nH_{2n}O)_t-R']$,
    R':          a radical selected from hydrogen, an alkyl, allyl, aralkyl and carbamyl radical,
    p :          0 or 1,
    Y :          $(C_nH_{2n}O)_t-R'$,
    m :          0 to 300,
    n :          2 to 10,
    s :          1 to 30,
    q :          1 to 300,
    t :          1 to 100, and
    $(C_nH_{2n}O)$ :    an oxyalkylene radical or a mixture of oxyalkylene radicals)

The silicone block copolymer should have a molecular weight higher than 500. With a molecular weight smaller than 500, the silicone block copolymer exudes from the surface of the product. The composition of the present invention should contain the silicone block copolymer in an amount of 0.1 to 5 parts by weight. With less than 0.1 parts by weight, the silicone block copolymer does not provide a foam product with uniform fine cell structure. With more than 5 parts by weight, the silicone block copolymer tends to exude from the surface of the foam product.

The composition of the present invention may be incorporated with an antioxidant, UV light absorber, inorganic filler, pigment, flame retardant, rubber, etc. according to need.

The composition of the present invention should be heated at a certain temperature for a certain period of time which are necessary for blowing and crosslinking to take place. To be concrete, the heating temperature is in the range of 120 to 300 °C and the heating time is 5 to 60 minutes. After blowing, the foam should be cooled slowly.

Thus obtained foam (unirradiated) is irradiated with ionizing radiation to give an open-cell foam having improved heat resistance. The foam for irradiation should preferably be in the form of a film or sheet; but it may be in any shape so long as it can be irradiated. The dose of irradiation should be such that the foam does not substantially flow when heated; in other words, it is in the range of 0.1 to 50 Mrad. Irradiation may be performed in air or in vacuum.

The invention will be described with reference to the following examples.


Examples 1 to 4 and Comparative Example 1

The following components were mixed at 80 °C for 5 minutes using a Banbury mixer and the mixture was pelletized.
  • 100 parts by weight of an ethylene-vinyl acetate copolymer having a melt index of 20 and containing 28 wt% of vinyl acetate (a product of Nippon Unicar Co., Ltd.)
  • 10 parts by weight of an azodicarbonamide blowing agent "Cell-mike CAP149" containing an adjuvant and having a blowing temperature of 125 °C (a product of Sankyo Kasei Co., Ltd.)
  • 1 parts by weight of a silicone block copolymer having a viscosity of 1300 cs (a product of Nippon Unicar Co., Ltd.) represented by the formula (a) below.

$$CH_3Si[O\{(CH_3)_2SiO\}_6(C_2H_4O)_{20}(C_3H_6O)_{20}C_4H_9]_3     (a)$$

The pellets were made into a 0.2 mm thick sheet by compression molding at 80 °C, under a pressure of 100 kg/cm², for 5 minutes. The resulting sheet was placed in an oven at 180 °C, with a polyester film underlaid. The sheet uniformly expanded within 5 minutes. The foam was allowed to stand until it cooled to room temperature. Thus there was obtained a 0.7 mm thick foam sheet of open-cell type having an average cell diameter of 0.09 ± 0.02 mm. This foam sheet was irradiated with electron rays in air using an electron ray irradiation apparatus, Model ESP-750 (accelerating voltage 750 kV), made by Nisshin High-voltage Co., Ltd. The absorbed dose in Examples 1 to 4 was 2, 4, 6, and 10 Mrad, respectively.

A test piece conforming to JIS K7113, type 3, was cut out of the foam sheet. The test piece was suspended in a hot air bath at 100 °C, with one end fixed and the other end weighted with a 6-g load. Thirty minutes later, the elongation of the foam sheet was observed. The results shown below.

4

| | Absorbed dose (Mrad) | Elongation (%) |
|---|---|---|
| Example 1 | 2 | 10 |
| Example 2 | 4 | 8 |
| Example 3 | 6 | 5 |
| Example 4 | 10 | 0 |
| Comparative Example 1 | 0 | > 300 |

Examples 5 to 8 and Comparative Example 2

The following components were mixed at 70 °C for 40 minutes by roll-milling and the mixture was pelletized.

- 100 parts by weight of an ethylene-ethyl acrylate copolymer having a melt index of 20 and containing 20 wt% of ethyl acrylate (a product of Nippon Unicar Co., Ltd.)
- 4 parts by weight of an azodicarbonamide blowing agent "Cell-mike CAP" having a blowing temperature of 130 °C (a product of Sankyo Kasei Co., Ltd.)
- 1 part by weight of dicumyl peroxide having a decomposition temperature of 150 °C (a product of Nippon Oils & Fats Co., Ltd.)
- 1 part by weight of polyethylene glycol having a molecular weight of 20,000 (a product of Wako Junyaku Co., Ltd.)

The pellets were made into a 0.2 mm thick sheet by compression molding at 80 °C, under a pressure of 100 kg/cm$^2$, for 5 minutes. The resulting sheet was placed in an oven at 180 °C, with a polyester film underlaid. The sheet uniformly expanded within 5 minutes. The foam was allowed to stand until it cooled to room temperature. Thus there was obtained a 0.7 mm thick foam sheet of open-cell type having an average cell diameter of 0.10 mm. This foam sheet was irradiated with electron rays in air using an electron ray irradiation apparatus, Model ESP-750 (accelerating voltage 750 kV), made by Nisshin High-voltage Co., Ltd. The absorved dose in Examples 5 to 8 was 2, 4, 6, and 10 Mrad, respectively.

A test piece conforming to JIS K7113, type 3, was cut out of the foam sheet. The test piece was suspended in a hot air bath at 100 °C, with one end fixed and the other end weighted with a 6-g load. Thirty minutes later, the elongation of the foam sheet was observed. The results are shown below.

| | Absorbed dose (Mrad) | Elongation (%) |
|---|---|---|
| Example 5 | 2 | 12 |
| Example 6 | 4 | 9 |
| Example 7 | 6 | 6 |
| Example 8 | 10 | 1 |
| Comparative Example 2 | 0 | > 300 |

Examples 9 to 12 and Comparative Example 3

The following components were mixed at 70 °C for 40 minutes by roll-milling and the mixture was pelletized.

- 100 parts by weight of an ethylene-vinyl acetate copolymer having a melt index of 20 and containing 20 wt% of vinyl acetate (a product of Nippon Unicar Co., Ltd.)
- 10 parts by weight of an azodicarbonamide blowing agent "Cell-mike CAP" having a blowing temperature of 130 °C (a product of Sankyo Kasei Co., Ltd.)
- 1 part by weight of dicumyl peroxide having a decomposition temperature of 150 °C (a product of Nippon Oils & Fats Co., Ltd.)
- 1 part by weight of triallyl trimellitate.
- NUC Silicon Oil L-45 having a viscosity of 1,000 cs. (a product of Nippon Unicar Co., Ltd.)

The pellets were made into a 0.2 mm thick sheet by compression molding at 80 °C , under a pressure of 100 kg/cm$^2$, for 5 minutes. The resulting sheet was placed in an oven at 180 °C with a polyester film underlaid. The sheet uniformly expanded within 5 minutes. The foam was allowed to stand until it cooled to room temperature. Thus there was obtained a 0.7 mm thick foam sheet of open-cell type having an average cell diameter of 0.09 mm. This foam sheet was irradiated with electron rays in air using an electron ray irradiation apparatus, Model ESP-750 (accelerating voltage 750 kV), made by Nisshin High-voltage Co., Ltd. The absorved dose in Examples 9 to 12 was 2, 4, 6, and 10 Mrad, respectively.

A test piece conforming to JIS K7113, type 3, was cut out of the foam sheet. The test piece was suspended in a hot air bath at 100 °C , with one end fixed and the other end weighted with a 6-g load. Thirty minutes later, the elongation of the foam sheet was observed. The results are shown below.

| | Absorbed dose (Mrad) | Elongation (%) |
|---|---|---|
| Example 9 | 2 | 10 |
| Example 10 | 4 | 6 |
| Example 11 | 6 | 3 |
| Example 12 | 10 | 0 |
| Comparative Example 3 | 0 | > 300 |

The present invention provides an open-cell foam having good heat resistance. It will find use as a building cushioning material, automotive interior cushioning material, and packaging sheet.

## Claims

1. A process for the production of heat-resistant crosslinked ethylene resin foams of open-cell type, said process comprising heating a composition composed of:
    (A) 100 parts by weight of an ethylene resin,
    (B) 1 to 30 parts by weight of a blowing agent,
    (C) 0.2 to 10 parts by weight of an organic peroxide, and
    (D) a component selected from the group consisting of the following (a), (b) and (c),
        (a) 0.1 to 10 parts by weight of a trifunctional monomer and 0.1 to 5 parts by weight of a silicone oil represented by the formula:
        $R_3SiO-[R_2SiO]_kSiOR_3$ (where R denotes a monovalent hydrocarbon radical, and k denotes an integer of 10 to 730)
        (b) 0.1 to 5 parts by weight of a silicone block copolymer selected from:
        $R_3SiO-[R_2SiO)_m-[RXSiO]_s-SiR_3$ or
        $RSi-[O-(R_2SiO)_q-Y]_3$
        (where

| | |
|---|---|
| R : | a monovalent hydrocarbon radical |
| X : | $-[(O)_p-(C_nH_{2n}O)_t-R']$, |
| R': | a radical selected from hydrogen, an alkyl, allyl, aralkyl and carbamyl radical, |
| p : | 0 or 1, |
| Y : | $(C_nH_{2n}O)_t-R'$, |
| m : | 0 to 300, |
| n : | 2 to 10, |

s :  1 to 30,

q :  1 to 300,

t :  1 to 100, and

$(C_nH_{2n}O)$ :  an oxyalkylene radical or a mixture of oxyalkylene radical) and

(c) 0.1 to 5 parts by weight of polyethylene glycol, polypropylene glycol, a copolymer of ethylene oxide and propylene oxide, or a homopolymer or copolymer of other polyalkylene oxide, represented by the formula:

$RO-[C_{n'}H_{2n'}O]_{t'}-R$

(where R is a radical selected from hydrogen and a monovalent hydrocarbon radical; n' is an integer of 2 to 10; and t' is an integer of 20 to 400), followed by cooling, to give a crosslinked ethylene resin foam of open-cell type, and then irradiating the foam with ionizing radiation.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 544 490 (ALEXANDER)<br>* Claims 1-16 *<br>--- | 1 | C 08 J 9/00 //<br>C 08 L 23:00 |
| Y | EP-A-0 142 724 (JAPAN STYRENE PAPER)<br>* Claims 1-10 *<br>--- | 1 | |
| X | DATABASE WPIL, No. 88-224309, Derwent Publications Ltd, London, GB; & JP-A-63 159 450 (SEKISUI CHEM. IND.)<br>* Both abstracts *<br>--- | 1 | |
| Y | US-A-4 501 711 (SENUMA et al.)<br>* Column 6, example 1; column 9, comparative example 1; claims 1-2 *<br>--- | 1 | |
| Y | DATABASE WPIL, No. 88-224307, Derwent Publications Ltd, London, GB; & JP-A-63159448 (SEKISUI CHEM. IND.)<br>* Both abstracts *<br>--- | 1 | |
| Y | DATABASE WPIL, No. 87-316504, Derwent Publications Ltd, London, GB; & JP-A-62 223 243 (SEKISUI CHEM. IND.)<br>* Both abstract *<br>--- | 1 | TECHNICAL FIELDS SEARCHED (Int. Cl.5)<br><br>C 08 J |
| A | US-A-4 424 181 (SENUMA)<br>* Claim 1 *<br>----- | 1 | |

The present search report has been drawn up for all claims

| Place of search | Date of completion of the search | Examiner |
|---|---|---|
| THE HAGUE | 31-05-1991 | OUDOT R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

**X** ## LACK OF UNITY OF INVENTION

The Search Division considers that the present European patent application does not comply with the requirement of unity of invention and relates to several inventions or groups of inventions,

namely:

        See sheet -B-

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims.

namely claims:

## LACK OF UNITY OF INVENTION

The Search Division considers that the present European patent application does not comply with the requirement of unity of invention and relates to several inventions or groups of inventions, namely:

1. Claims 1-D(a)

2. Claims 1-D(b)

3. Claims 1-D(c)